(19)

Europäisches
Patentamt

European
Patent Office

Office européen
des brevets

(11) **EP 2 286 272 B1**

(12) **EUROPEAN PATENT SPECIFICATION**

| (45) Date of publication and mention of the grant of the patent:<br>**17.04.2013 Bulletin 2013/16** | (51) Int Cl.:<br>**G01S 3/808** [(2006.01)]  **G01S 15/66** [(2006.01)] |
|---|---|
| (21) Application number: **09807444.6** | (86) International application number:<br>**PCT/EP2009/056838** |
| (22) Date of filing: **03.06.2009** | (87) International publication number:<br>**WO 2010/043428 (22.04.2010 Gazette 2010/16)** |

(54) **METHOD OF ESTIMATING PROBABILITY DISTRIBUTIONS OF THE PRESENCE AND NON-PRESENCE OF INTRUSIONS IN A SURVEILLANCE AREA**

VERFAHREN ZUR HERSTELLUNG VON WAHRSCHEINLICHKEITSVERTEILUNGEN DER ANWESENHEIT UND NICHTANWESENHEIT VON EINDRINGVERSUCHEN IN EINEM ÜBERWACHTEN BEREICH

PROCEDE D'ESTIMATION DE DISTRIBUTION DE PROBABILITE DE PRESENCE OU D'ABSENCE D'INTRUSIONS DANS UNE ZONE DE SURVEILLANCE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **03.06.2008 FR 0803062**

(43) Date of publication of application:
**23.02.2011 Bulletin 2011/08**

(73) Proprietor: **THALES**
**92200 Neuilly-sur-Seine (FR)**

(72) Inventor: **ALINAT, Pierre**
**F-06140 Vence (FR)**

(56) References cited:
**US-B1- 7 020 046**

- **PARILLO D S: "Evaluating search effectiveness using a combination of modeled and measured data" OCEANS '95. MTS/IEEE. CHALLENGES OF OUR CHANGING GLOBAL ENVIRONMENT. CONFERENCE PROCEEDINGS. SAN DIEGO, CA, USA 9-12 OCT. 1995, NEW YORK, NY, USA,IEEE, US, vol. 3, 9 October 1995 (1995-10-09), pages 1609-1613, XP010197612 ISBN: 978-0-933957-14-5**
- **KROUT D W ET AL: "Intelligent ping sequencing for multistatic sonar systems" 2006 9TH INTERNATIONAL CONFERENCE ON INFORMATION FUSION, FUSION - 2006 9TH INTERNATIONAL CONFERENCE ON INFORMATION FUSION, FUSION 2006 INST. OF ELEC. AND ELEC. ENG. COMPUTER SOCIETY US, 2006, XP002510132**
- **MARTINERIE F: "Data fusion and tracking using HMMs in a distributed sensor network" IEEE TRANSACTIONS ON AEROSPACE AND ELECTRONIC SYSTEMS, IEEE SERVICE CENTER, PISCATAWAY, NJ, US, vol. 33, no. 1, 1 January 1997 (1997-01-01), pages 11-28, XP011201070 ISSN: 0018-9251**

**Description**

The present invention relates to the general field of acoustic submarine detection. It more particularly relates to the conducting of antisubmarine warfare operations, aiming notably to protect certain areas of the submarine environment from any intrusion.

When conducting antisubmarine warfare (LSM) operations, operations conducted from a boat or boats (or aircraft) such as a frigate for example, the officer in charge of these operations has the task of preventing any intrusion into the area that he is responsible for surveilling. To do this, he tries, generally, to estimate the places of this area in which an enemy submarine, or more generally an intruder, could be at the present instant given what has happened up to that instant. Similarly, he tries to determine where such a submarine may be in the near future given the behaviour predicted for the submarine and for the surveillance ship, and the actions that will be undertaken.

This step-by-step prediction is genuinely useful for determining the actions that it seems relevant to execute in the future to keep on completing the mission, bearing in mind that the available detection capabilities do not generally allow all the area to be protected to be covered from the position occupied at a given instant.

This search for intruders, mainly offensive in purpose, is generally based on an estimation of presence distribution of an undesirable submarine at the present instant at each point of the portion of submarine space being surveilled. It represents a difficult task because this distribution depends on numerous factors, among which can be cited :

- the past actions of all the naval force present in the area, that is, the movements of the boats, the effects of the use of their sonars, of their radars and of the radiofrequency transmissions,
- the assumptions relating to the possible behaviour of an enemy submarine, behaviour that can be estimated from its assumed kinematic capabilities (speed, submersion, autonomy), the assumed performance characteristics of its sensors and the mission that it is assumed to fulfil,
- the characteristics of the aquatic environment that condition in particular the performance characteristics of the sonars.

The quality of the result of the estimation performed is therefore greatly dependent on the quality (i.e. of the conformity to reality) of the assumptions made concerning the submarine, in particular concerning its behaviour and its abilities to evade the surveillance. It is in this dependency that the estimation difficulty lies, because, in principle, these assumptions are unsafe given that they result from limited choices made from a large number of behaviour possibilities.

To date, a growing number of tools have been developed to provide help in estimating this presence probability distribution. These tools are intended to be implemented in the decision-aid systems (or "Combat Decision Systems") with which the antisubmarine warfare boats are equipped.

Conventionally, the estimation of the probability distribution of presence of an intrusive submarine is made on the basis of a probabilistic behaviour model assumed to represent as faithfully as possible the behaviour of an intrusive submarine given assumptions made a priori concerning this submarine. Generally, it is a reactive model, that is, a model dependent on the actions of the naval force as they can be perceived by the submarine. It is even possible to use a more sophisticated behaviour model, itself consisting of a combination of several elementary models with a priori probabilities assigned to each elementary model. Normally, this model corresponds to the best assumption(s) that can be made concerning the behaviour of the enemy submarine.

Also conventionally, the estimation proper is generally based on a Monte-Carlo method, for which several thousands of instances of movement, of a submarine located in the area concerned, are analysed. These instances are drawn at random, applied and maintained over time (starting from a certain initial distribution) independently of each other.

The distribution of the probability of presence $P_{SM}$ of a submarine is estimated at each instant from the positions assigned to these instances, taking into account for each instant aggregate probabilities, up to the instant concerned, that this instance has been detected.

These instances are, moreover, maintained by assuming that the submarine associated with each of them follows the chosen behaviour model. Then, according to the $P_{SM}$ calculated in different places of the surveillance area, the antisubmarine warfare ship adopts the behaviour and performs the actions most likely to improve the situation over the whole area, that is, prevent the submarine from being able to fulfil its mission.

Starting from this principle, it is clear that the relevance of the estimation of the distribution of the presence $P_{SM}$ of the submarine in each place of the area is very highly dependent on the validity of the behaviour model or models used for the submarine and therefore on the assumptions made. Furthermore, the relevance of this estimation is highly dependent on the number of instances analysed, a number that in turn depends on the computation power available for making the calculations.

Furthermore, the estimation difficulty is further increased by the fact that, faced with the attempt made by the commander of the antisubmarine warfare ship to estimate and model the behaviour of the submarine, the role of the commander of the submarine will be to try to work out the assumptions that can be made regarding its behaviour and act by taking these assumptions into account. Consequently, he tries to adopt a behaviour that minimizes the chances that the assumptions made by the frigate are correct.

Regarding the offensive aspect of the mission fulfilled by the antisubmarine warfare ship, an aspect that consists in maximizing the chances of detecting and then destroying the submarine, this known approach that is widely described in the state of the art, appears perfectly suitable for estimating the probable location of an undesirable submarine (therefore $P_{SM}$) as accurately as possible. In practice, it is often impossible to perform a simultaneous search in all the places where a threat could be, such an exhaustive search being indispensible in the absence of assumptions concerning its behaviour. In other words, bearing in mind that an exhaustive search is not possible, it is better to make location assumptions that seem valid than to search at random. The chances of its success are increased.

Thus, by proceeding in this way, it is possible to determine places of the area being surveilled where threats are probably located, and to do so with chances of success that are greater than that offered by a search performed without making any assumption concerning the behaviour of the submarine. On the other hand, it is impossible to guarantee that, outside these places with high probability of presence of a threat, the probability of presence of a threat is necessarily very low or even zero. An approach such as that described previously does not make it possible to guarantee with a sufficient chance of success, even by prohibitively multiplying the number of draws and instances analysed, that no intrusive submarine, corresponding to an instance that is not considered, will not be surveilled in the sensitive area. Such is, for example, the case if the submarine concerned adopts a behaviour that is substantially or even radically different from the behaviour model retained.

Consequently, for want of any appropriate method to implement, there is at the present time no method that can really satisfactorily guarantee both that a sufficient detection probability is available and that the risk that certain real threats are not detected is sufficiently low.

One aim of the invention is to solve the problem stated above and more specifically to propose a solution that enables an operator responsible for supervising the antisubmarine warfare operations, to determine, as safely as possible, the places of the surveillance area that require extra attention and those that require only a little attention. One of the aims sought is also to best exploit the available detection equipment, given its performance characteristics.

In other words, one aim of the invention is to propose a means for determining, in a fixed area, the places likely to host threats so as to devote to their surveillance the maximum of resources and time, while best estimating the low possible remaining distribution of the threat in the areas a priori not likely to host such a threat.

To this end, the subject of the invention is a method for determining in a given surveillance area, the places likely to host an intruder, the determination being performed by a (or several) surveillance ship(s) (or aircraft) moving above the surveillance area and applying, at given instants t, means for detecting the presence of a target in the surveillance area. The inventive method applies the following steps :

- a first step of estimating the position of potential intruders in the surveillance area, this estimation being performed by determining the probability of presence $P_{SMd}(t)$ of an intruder at each point of the surveillance area for a given instant t, said intruder being assigned a behaviour according to a predefined, noise-affected deterministic reactive model ;
- a second step of estimating the places of the surveillance area in which an intruder is not likely to move, this step comprising :
- a first substep of estimating the probability of presence $P_{SMa}(t)$ of an intruder at each point of the surveillance area for a given instant t, said intruder being assigned an almost random behaviour defined by a kinematic model ;
- a second substep of calculating the probability of non-presence $P_{SMa}^{*}(t)$ corresponding to the probability of presence $P_{SMa}(t)$ estimated in the first substep and defined by the relation :

$$P_{SMa}^{*}(t) = 1 - P_{SMa}(t)$$

The two estimations are performed simultaneously by different methods so that the presence distribution law and the non-presence distribution law determined in this way are not deduced from each other. The probabilities $P_{SMd}(t)$ and $P_{SMa}(t)$ defined in a given place of the surveillance area taking into account probabilities $P_d(t)$ of detection of a target by the detection means, determined for each instant t at each place of the surveillance area.

According to a particular embodiment, the inventive method also comprises a third step during which the estimations obtained in the first two steps are associated, so as to decide, based on given criteria, which of the two information items $P_{SMd}$ and $P_{SMa}^{*}$ is the most relevant at each point of the area being surveilled for each instant t.

According to a particular embodiment, the first step is implemented by estimating the probability of presence of an intruder by a Monte Carlo method, the instances of intruders being studied being moved according to a noise-affected deterministic reactive behaviour and the probability of presence at each point and at each instant t being obtained from the local density of the instances at that point and their aggregate probabilities of having been detected in past applications of the detection means.

According to a particular embodiment, the second step is implemented by estimating the probability of presence of an intruder by an HMM method, the associated transition matrix reflecting an almost random and non-reactive behaviour, the detection probabilities of the detection means at each point and at each instant t providing the observation function in the HMM process.

By combining the two information items delivered by the first two steps of the inventive method, it is advantageously possible for the operator to concentrate his surveillance on the places of the space being surveilled for which the probability of presence of an intruder is high and judge the effectiveness of his past or planned action by observing the distribution of the probability of "non-presence" of an intruder.

The characteristics and advantages of the invention will be better appreciated from the following description, which explains the invention through a particular embodiment taken as a non-limiting example and which is based on the appended figures, the figures representing :

- Figure 1, an illustration relating to an exemplary application of the inventive method relating to the protection of a strait forming the inlet to a maritime area to be protected ;
- Figure 2, a theoretical flow diagram of the main steps of the method according to the invention ;
- Figure 3, an illustration relating to a possible use of the results obtained by the first step of the method according to the invention ;
- Figures 4 to 6, illustrations relating to the operating principle of the second step of the method according to the invention ;
- Figure 7, an illustration relating to a possible use of the results obtained by the second and the third steps of the method according to the invention ;
- Figure 8, an illustration relating to the joint use of all the results obtained by the method according to the invention ;
- Figure 9, an illustration relating to the implementation of the combination of the two steps of the method according to the invention.

For reasons of clarity in the explanation, the rest of the document describes the invention through its application to the protection of a submarine space, access to which is provided by a strait. However, this particular application should not be considered to limit the scope of the invention, because the general characteristics of the inventive method make the latter easily applicable to the surveillance and protection of a variety of areas.

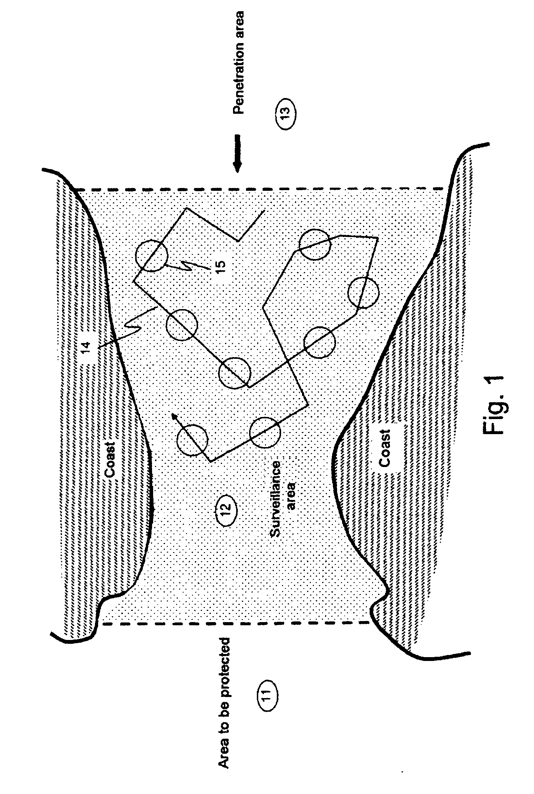

Figure 1 illustrates this application. The protection of the area 11 being considered here is provided by controlling the presence of intruding submarines in the area 12 of the strait that separates the area 11 from the uncontrolled area 13. In the exemplary application described, interest is therefore focused on the means of protecting the area 11 concerned against possible submarine intrusions occurring via the strait, by providing surveillance from the surface by means of one or more antisubmarine warfare ships (or aircraft), each ship patrolling in the area of the strait according to an itinerary defined by the person in charge of the antisubmarine warfare mission, the itinerary being symbolized by the line 14 in figure 1.

To this end, these ships carry out, during the mission, detection operations that are more or less spaced apart in time according to requirements, the operations being symbolized by the circles 15 in Figure 1.

Depending on the operational situation and the available resources, the surveillance area 12 may be surveilled by more or less significant means. In particular, the surveillance area 12 may be covered by one or more ships. However, whatever the extent of the means deployed, it is rarely possible to provide effective surveillance, using detection means, at all the points of the volume of water of the surveillance area simultaneously. Consequently, it is necessary, at all times, to choose the place (or the places) of the surveillance area 12 to which this effective surveillance should more particularly be applied. The object of the method according to the invention is to enable the person in charge of the antisubmarine warfare to make these choices judiciously and safely, while being able to judge the degree of effectiveness of the past or planned actions.

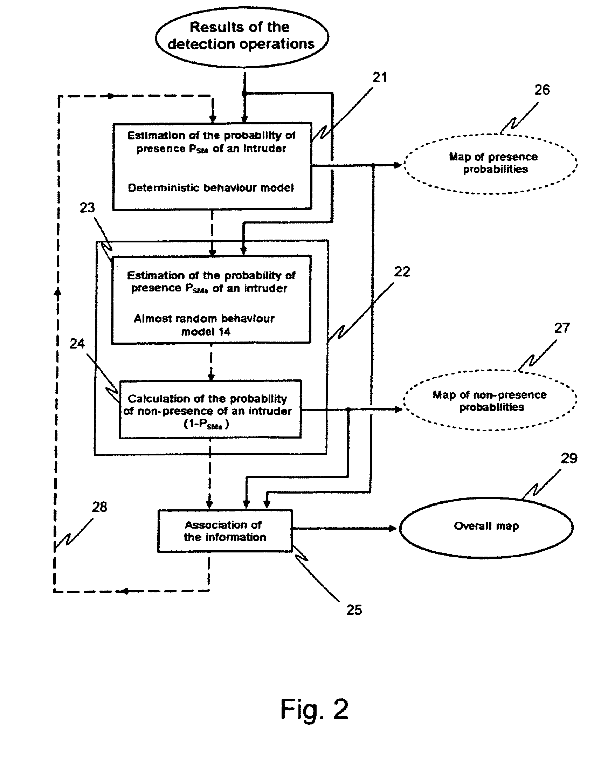

Figure 2 is a flow diagram presenting the main steps that make up the method according to the invention.

As can be seen in the figure, it is an iterative method intended to be executed periodically throughout the duration of the surveillance mission, while the ship responsible for this surveillance is moving in the surveillance area 12, by from time to time carrying out a detection operation. This detection operation can be conducted using an active device and can, for example, consist in emitting a sonar pulse and collecting and processing the reflected echoes. It can even, alternatively, consist in passively listening for noise sources present in the area of the submarine space under surveillance.

The method according to the invention consists of two main steps, a first step 21 and a second step 22 during which, for a current instant t, the probability of presence of a threat at each point of the surveillance area 12 is estimated.

According to the invention, each of the two steps independently provides an estimation of the probability of presence of a threat at any place of the surveillance area 12, the estimation method used being different from one step to the next.

In the step 21, the estimation $P_{SMd}$ is performed by a method based on assigning the possible intruders a type of noise-affected deterministic reactive behaviour (behaviour called "determinist" hereinafter in the text to distinguish it from the behaviour assigned in the second step).

In the step 22, the estimation $P_{SMa}$ is performed by a method based on almost random non-reactive behaviour of these possible intruders. The step 22 is also associated with a step 23 during which the estimation $P_{SMa}$ performed in the step 22 is used to calculate the estimation of the probability of "non-presence" $P_{SMa}^*$ in any place of the surveillance area 12, the latter being defined by the relation :

$$P_{SMa}^* = (1 - P_{SMa})\qquad\qquad [1]$$

According to the invention, the methods of estimating the probability of presence of an intruder also take into account the results of the detection operations performed so that the estimated probability of presence of an intruder in any given place is possibly assigned to an instant given by these measurement results.

Each of the steps 21 and 22 of the inventive method provides information that makes it possible to construct a map of the surveillance area 12. The step 21 can be used to construct a map 26 which associates with each of the places of the area 12 a given probability of presence, whereas the step 22 can be used to construct a map 27 which associates with each of the places of the area 12 a given probability of "non-presence".

The inventive method also comprises an additional step 25 of associating the information items produced by the two steps 21 and 22, the purpose of this step being to construct a composite map of the surveillance area 12. Producing this composite map 29 entails assigning to each place of the area being surveilled 12 showing a high and validly estimated probability of presence $P_{SMd}$, the value of this probability $P_{SMd}$ and, to each place of the area being surveilled 12 showing an excessively low or badly estimated probability of presence $P_{SMd}$, the value of the probability of "non-presence" $P_{SMa}^*$.

According to the invention, as illustrated by the broken circular arrow 28 in Figure 2, the succession of the steps 21 and 22 is also repeated so as to regularly refresh the estimations of the probabilities of presence $P_{SMd}$ and of "non-presence" $P_{SMa}^*$ so as to enable the corresponding maps to be kept up to date.

According to the invention, the aim of the first step 21 is notably to facilitate the conducting of the offensive aspect of the surveillance mission which involves choosing a movement itinerary for the surveillance system, the antisubmarine warfare ship for example. More generally, its aim is to enable the operator to adopt an active warfare behaviour which is not simply the product of chance or experience.

To this end, the estimation method implemented is a conventional Monte-Carlo-type method which consists in statistically analysing the trend over time of the movement of a population of typical intruders, the initial position of which is drawn at random, each intruder having a behaviour conforming to a given noise-affected deterministic model affecting a given number of parameters (position, speed, direction of movement, etc...). This estimation method determines, at each estimation instant and for each instance, the behaviour of the corresponding intruder. This behaviour is established by randomly drawing the values of the parameters retained to describe the behaviour of the intruder, the draws being performed according to distribution laws chosen elsewhere. The behaviour assigned to the intruder is in this case a reactive behaviour, that is, a behaviour that notably takes into account the actions of the surveillance ships up to the instant concerned, the assumed objective assigned to this intruder and, its capacity to perceive the events (detection operations, movement of the surveillance means) that occur in a more or less close vicinity.

Consequently, the probability $P_{SMd}$ of presence of a target, at a given instant, in a given place of the surveillance area 12, is determined from the density of instances of intruders in this place and their aggregate probabilities of having been detected.

Thus, by assuming that the chosen behaviour model is close to a real behaviour, and by having means for analysing a sufficient number of instances, it is possible to estimate satisfactorily the probability of presence of a threat of one or more given types in different places of the surveillance area 12.

This estimation is, moreover, advantageously associated with the results of the detection operations so as to make the trend of each of the instances analysed dependent on these detection operations. Consequently, the probability of presence in a place is weighted by the probability $P_d$ of detection in that place.

The estimations of the probability of presence in each of the places of the surveillance area obtained in this way can be used in different ways, the aim being that, rather than follow a path determined somewhat by chance, the ship responsible for the surveillance of the area 12 concerned adopts a path that takes into account the results of the estimations of the probability of presence made.

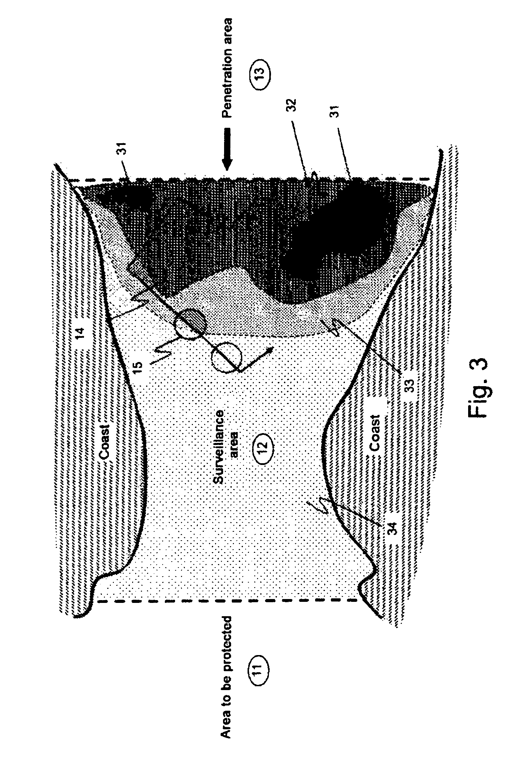

It is, for example, possible to periodically maintain a map 26 of the probabilities of presence in the form of a table of coordinates in which, for each place, the associated probability of presence is recorded, this table being transmitted to processing means so as to be analysed either automatically to determine the appropriate behaviour of the surveillance means, or manually by a human operator, the officer responsible for the antisubmarine warfare for example. It is then possible, as Figure 3 illustrates, to use this data in a graphic form such as an annotated map of the surveillance area 12. This annotated map represents, for example, the route 14 followed by the surveillance ship, the spots where active detection operations have been performed, and geographically differentiated areas in which the probability of presence is contained in a given range. This way, the operator can advantageously easily distinguish the areas 31 where the estimated probability of presence of a ship whose behaviour conforms to the adopted model is high from the areas 32 or 33 where it is lower, even the areas 34 where it is close to zero.

This first estimation step 21, based on the application of a Monte-Carlo-type method can advantageously be used to improve the offensive action of the surveillance system by enabling the operator to focus his attention on the places with high probability of presence. However, regarding the places with low probability of presence, its effectiveness is, as is known, limited mainly by two factors :

- a quantitative factor concerning the number of instances that it is possible to maintain in a time slot At that is sufficiently small to allow for periodic refreshing, at a rate that is satisfactory from an operational point of view, of the estimations of probability of presence $P_{SMd}$;
- a qualitative factor concerning the choice of the behaviour and aptitude model that is applied to the instances being analysed.

Consequently, if the behaviour model is correctly chosen and if the number of instances analysed is sufficient, the use of a Monte-Carlo-type method makes it possible to safely determine the places where the probability of locating an intruder is high. However, this determination is not in principle exhaustive notably because intruders whose behaviour does not conform to the model may be situated in places presenting a low probability of presence in light of the assumptions made and of the number of instances, places which, based on other behaviour assumptions or with a higher number of instances, would present a higher probability of presence.

In other words, the use of a Monte-Carlo-type method makes it possible to determine the places with high probability of presence according to the chosen criteria without in any way guaranteeing, sufficiently safely, the absence of intruders in the places with low probability of presence according to the same criteria. Therefore, limiting the surveillance of these places presents an operational risk.

According to the invention, the role of the second estimation step 22 consists, as stated previously, in securing the estimation $P_{SMd}$ made, in particular for the places for which the first step 21 has produced an estimation of insufficient quality of the probability of presence $P_{SMd}$.

For this, the step 22 in turn comprises two substeps 23 and 24. The substep 23 establishes an estimation of the probability of presence of an intruder $P_{SMa}$ relying on an almost random non-determinist method, based on the use of a model of the "Hidden Markov Model", or HMM, type.

Practically, the method implemented during this substep 23 is based on the following principles :

- breakdown of the submarine space corresponding to the surveillance area 12 into a plurality of elementary cells, the set of cells covering all of the surveillance area. The set of cells defines a status space in which each cell is characterized by the probability of presence $P_{SMa}$ of an intruder in that cell ;
- determination of a rudimentary kinematic model of the movement of an intruder ;
- definition of a transition matrix T indicating the probability that the intruder passes from a cell (x, y, z) at the instant t to the cell (x+i, y+j, z+k) at the instant t+1, the dimension and the coefficients of the matrix depending on the kinematic model chosen ;
- assignment of an initial distribution $P_{SMa}(0)$ to the set of cells and an entry distribution on the cells situated along certain limits of the surveillance area 12.

Consequently, the method used consists in iteratively repeating the following operations :

- application of the transition matrix T to determine an estimation of the probability P(t) of each of the cells at the instant t concerned based on the probabilities P(t - Δt) ;
- consideration of the results of any detection operations performed by the available detection means and assignment of a detection probability $P_d$ to each of the cells ;
- consideration of $P_d$ in the estimation of the probability of presence of an intruder in each of the cells, $P_{SMa}(t)$ being defined by the relation :

$$P_{SMa}(t) = (1-Pd)\ P(t) \qquad\qquad [2]$$

The transition matrix T reflects the possible movements of an intruder in a time period between two estimation instants t and t+Δt. It characterizes the probability that an intruder located in a given cell at the instant t has passed from that cell to a destination cell more or less distant from the original cell. According to the invention, the dimensions of the transition matrix and the values of its coefficients $a_{i,j}$ are defined according to the breakdown of the area to be surveilled, the form, the arrangement of the cells and the rudimentary model of possible movement assigned to the intruder.

The rudimentary model of possible movement considered is in this case a simple kinematic model defined in particular by the range of possible horizontal speeds $[0, V_{max}]$ within which is necessarily situated the speed v that an intruder can adopt. This speed variation range has a distribution law associated with it which characterizes the probability that the intruder adopts a given speed. This distribution law is, for example, a normal or uniform type statistical law. Thus, the intruder can move between two consecutive estimation instants t and t+Δt, with a given speed, in all directions. Another $V_{max}$ can be defined to characterize the changes of submersion.

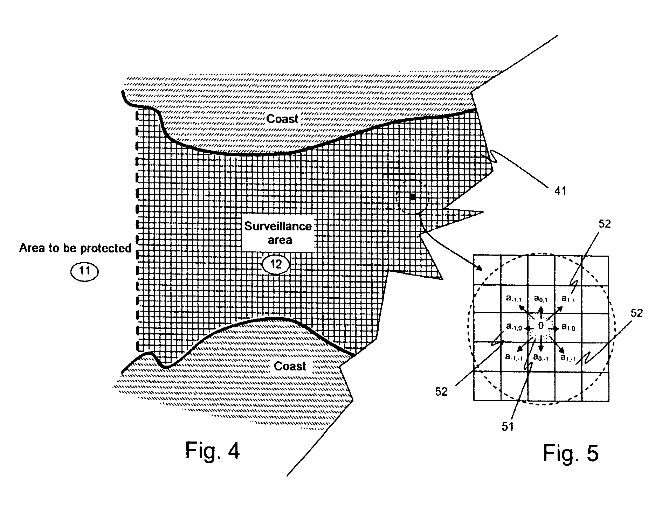

Figures 4 to 6 illustrate the principle of the estimation method used through a deliberately simplified situation in which the movement of an intruder in the surveillance area is limited to the movement in a plane. This simplification that makes it possible to explain simply the operating principle of the method, can moreover easily be applied generally to a movement in the three dimensions defining the space forming the surveillance area.

According to the invention, the application of the method used entails breaking down the surveillance area (in this case, a flat area) into a plurality of contiguous square cells 41 arranged along two perpendicular axes Ox and Oy. Each cell is, for example, identified by the coordinates of its centre on the two axes relative to a fixed origin O. At a given instant, each cell 41 is also assigned a parameter $P_{SMa}$ corresponding to the probability of presence of an intruder in that cell. According to the invention, on initialization of the process, an initial value is assigned to each cell (for example zero or a uniform distribution according to a choice made by the user).

As stated previously, the transition matrix defines, as illustrated by Figure 5, the set of cells 52 that are likely to be reached, in the time Δt between two estimations, by an intruder whose kinematics fall within a chosen range $[0, V_{max}]$, starting from any cell 51. The coefficients $a_{i,j}$ of this matrix each correspond here to the probability for the intruder to reach the cell 52 with which it is associated, given the speed that must drive the intruder for it to reach that cell from the original cell 51. This probability is naturally linked to the probability associated with the speed concerned by the chosen distribution law.

In this case, in the interests of simplicity, the speed range $[V_{min}, V_{max}]$ chosen in the context of figures 4 and 5 is such that the cells 52 that can be reached from an original cell are limited to only the cells contiguous to the cell 51 concerned, or eight cells in all.

There is then obtained a transition matrix T in the form :

$$T = \begin{bmatrix} a_{-1,1} & a_{0,1} & a_{1,1} \\ a_{-1,0} & a_{0.0} & a_{1,0} \\ a_{-1,-1} & a_{0,-1} & a_{-1,-1} \end{bmatrix} \qquad\qquad [3]$$

In which the coefficients $a_{i,j}$ are relatively indexed in relation to the original cell 51.

Consequently, for a cell 51 of coordinates (x, y) the estimated probability of presence of an intruder at the instant t, denoted $P_{x,y}(t)$, will be distributed at the next instant t+Δt to the set of eight adjacent destination cells 52 as follows :

$$P_{x-1,y+1}(t+\Delta t) = a_{-1,1}P_{x,y}(t)$$

$$P_{x-1,y}(t+\Delta t) = a_{-1,0}P_{x,y}(t)$$

$$P_{x-1,y-1}(t+\Delta t) = a_{-1,-1}P_{x,y}(t)$$

$$P_{x,y+1}(t+\Delta t) = a_{0,1}P_{x,y}(t)$$

$$P_{x,y}(t+\Delta t) = a_{0,0}P_{x,y}(t)$$

$$P_{x,y-1}(t+\Delta t) = a_{0,-1}P_{x,y}(t)$$

$$P_{x+1,y+1}(t+\Delta t) = a_{1,1}P_{x,y}(t)$$

$$P_{x+1,y}(t+\Delta t) = a_{1,0}P_{x,y}(t)$$

$$P_{x+1,y-1}(t+\Delta t) = a_{1,-1}P_{x,y}(t)$$

Thus, knowing the probability of presence of an intruder at an instant t of each of the cells 41 forming the surveillance area, it is possible to determine its contribution to the probability of presence of that intruder in the destination cells. The probability of presence of an intruder at the instant $t+\Delta t$ in a cell is then equal to the sum of the contributions of each of the cells for which it constitutes a destination for the next instant.

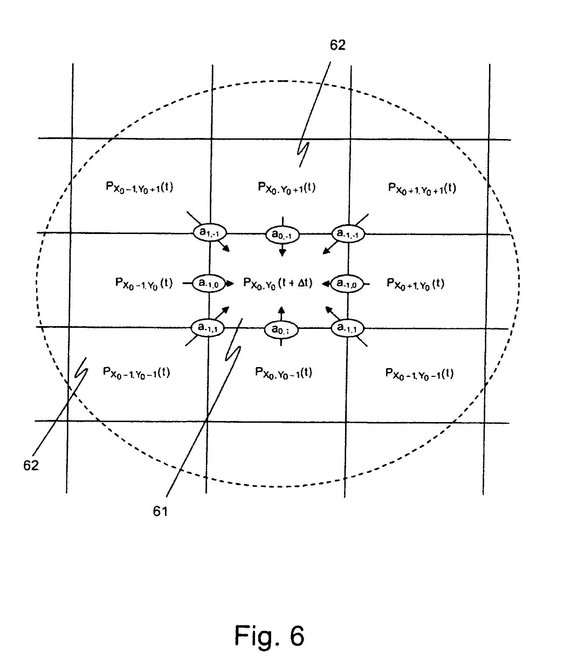

Thus, as illustrated by Figure 6, the probability of presence at the instant $t+\Delta t$ in the cell 61 of coordinates $(X_0, Y_0)$ will be obtained by adding together the contributions of the eight cells 62 that surround it as follows :

$$\begin{aligned}
P_{X_0,Y_0}(t+\Delta t) &= a_{1,-1} \cdot P_{X_0-1,Y_0+1}(t) + a_{1,0} \cdot P_{X_0-1,Y_0}(t) + a_{1,1} \cdot P_{X_0-1,Y_0-1}(t) \\
&+ a_{0,-1} \cdot P_{X_0,Y_0+1}(t) + a_{0,0} \cdot P_{X_0,Y_0}(t) + a_{0,1} \cdot P_{X_0,Y_0-1}(t) \qquad [4]\\
&+ a_{-1,-1} \cdot P_{X_0+1,Y_0+1}(t) + a_{-1,0} \cdot P_{X_0+1,Y_0}(t) + a_{-1,1} \cdot P_{X_0+1,Y_0-1}(t)
\end{aligned}$$

Consequently, by periodically carrying out the corresponding calculation for each of the cells forming the area being surveilled, an almost random periodic estimation of the distribution of the probability of presence over the area is obtained.

According to the invention, as stated previously, the probability of presence calculated in this way is moreover modified according to the probability of detection $P_d$ that can be associated with the cell concerned, in as much as the detection operations have been performed in a given space covering that cell. That way, the probability of presence $P_{SMa}(t)$ of the cell concerned, of coordinates $(x, y)$, is not equal to the estimated probability $P_{x,y}(t)$ as described by the relation [4], but by the estimated probability of presence defined by the following relation :

$$P_{SMa}(t) = (1-P_d) \cdot P_{x,y}(t) \qquad [5]$$

The detection probabilities of the detection means at each point and at each instant t here provide the observation function of the HMM process.

The principle of the method as described by limiting the surveillance area to a flat area and by limiting the speed range considered for the movement of an intruder, can be generalized on the basis of the above explanation to situations that are less limited and more in accordance with reality. The speed range can in particular be chosen so that the cells 52 that can be reached from an original cell 51 are not only the cells contiguous to the cell concerned, but also more distant cells. The generalization of the principle described in the case of an operation in three dimensions can also be approached by considering the same assumptions as in the preceding simple example. The cells 52 that can be reached from an original cell 51, limited to only the cells contiguous to the cell concerned, are then the 26 cells contiguous to the cell concerned. The submarine volume corresponding to the surveillance area is then divided into elementary cells, aligned parallel to three perpendicular axes Ox, Oy and Oz for example. The transition matrix then comprises, in these more general cases, a larger number of coefficients, taking into account a bigger environment of each cell and in particular the fact that an intruder situated in a given cell at a given instant t is able to move in three directions in the space.

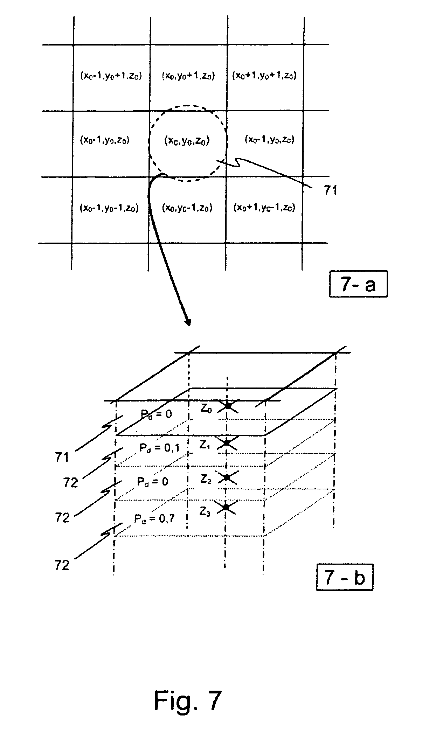

It should, however, be noted that, for each cell concerned, the associated detection probability depends on the position of the cell in the submarine volume corresponding to the surveillance area. It should also be noted that, for one and the same object, this detection probability varies not only with the distance that separates the detection means from the object, but also with the depth at which the object is located, the propagation conditions being essentially variable with depth. In a simplified alternative variant, the submersion movements are not directly taken into account. In this alternative variant embodiment, illustrated by Figure 7, the estimation of the probability of presence $P_{SMa}(t)$ is made during the substep 23 by taking, for each cell 71 of coordinates (x, y, z), a detection probability $P_d$ equal to the lowest detection probability out of those associated with the cells 72 having x and y coordinates identical to those of the cell concerned. Thus, in the example of Figure 7, the probability assigned to each of the cells of coordinates $(x_0, y_0, z_i)$ will be equal to $P_d = 0$, the lowest detection probability (that normally associated with the cells of coordinates $(x_0, y_0, z_0)$ and $(x_0, y_0, Z_3)$).

As can be observed, on reading the above explanation, the second estimation method implemented in the substep 23 of the inventive method based on a remarkably limited number of parameters, does not require past events to be taken into account in order to make an estimation at a given instant t. That way, it is advantageously possible to calculate a probability of presence in any place of the surveillance area. However, the probability of presence calculated in this way does not lead to a clear definition of areas with high probability of presence, the positioning of the places with high probability of presence being more diffuse. It is not therefore very informative in terms of probability of presence and therefore cannot replace the method used in the first step 21 to facilitate the search for any intruders. On the other hand, it does make it possible to determine, by contrast, very accurately and reliably, the places where the probability of presence of an intruder is very low, even substantially zero, so that the surveillance of these places is not necessary. This is why the second step 22 includes a second substep 24 which consists in calculating, from the estimation of the probability of presence $P_{SMa}(t)$, the probability of "non-presence" $P_{SMa}^{*}(t)$ defined by the following relation :

$$P_{SMa}^{*}(t) = 1 - P_{SMa}(t) \qquad [6]$$

The probability of non-presence is thus defined as the probability of not detecting any intruder in the cell concerned.

The estimation of the probability of non-presence makes it possible to create a map of the area to be surveilled which highlights the different places of that area according to the probability that those places host no threat. Consequently, the places for which the probability of non-presence is high can be considered to be places requiring lesser surveillance. However, this undifferentiated map is proposed here for each cell of the submarine space.

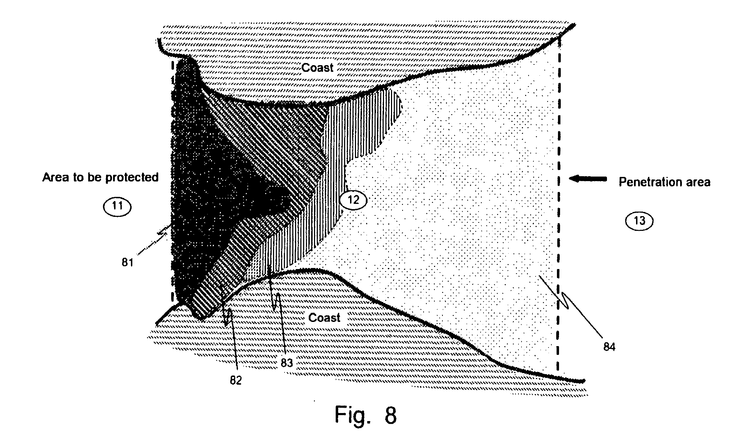

Like the estimation of the probability of presence $P_{SM}(t)$ performed during the first step of the method, the probability of non-presence $P_{SMa}^{*}(t)$ obtained in this way can be used in different ways, depending on the surveillance means implemented. It is, for example, possible to periodically maintain a map 27 of the probabilities of non-presence in the form of a table of coordinates in which, for each place, in particular for the places for which the estimated probability of presence $P_{SM}(t)$ is low, the associated probability of non-presence is recorded. This table can be transmitted to processing means so as to be analysed either automatically to determine the appropriate behaviour of the surveillance means, or manually by a human operator. It is possible in the latter case, as illustrated by Figure 8, to use this data in a graphic form such as an annotated map of the surveillance area 12. This annotated map shows, for example, in the manner of the annotated map shown in Figure 3, graphically differentiated areas in which the probability of non-presence is contained in a given range.

This way, the operator can advantageously easily distinguish the areas 81 where the estimated probability of non-presence is high from the areas 82 or 83 where it is lower, even from the areas 84 where it is close to zero, the areas 81 with high probability of non-presence constituting for the operator the areas requiring less surveillance.

Consequently, given that, on completion of the step 22, information relating both to the probability of presence and to the probability of non-presence of an intruder is available, the inventive method is complemented by a step 25 in which the probabilities of presence and of non-presence in the space corresponding to the surveillance area 12 are associated.

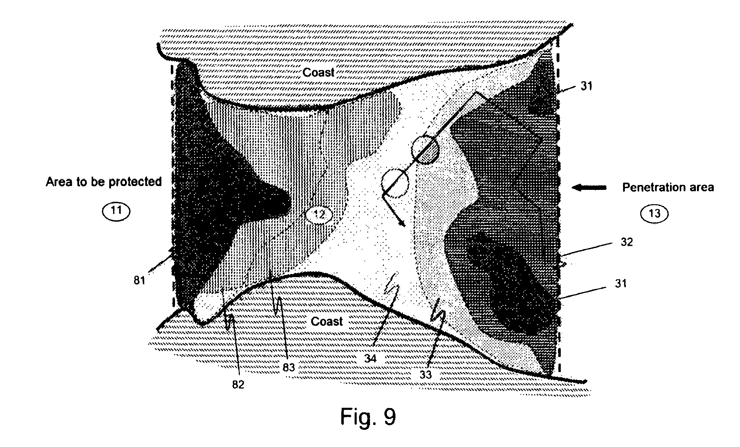

This association consists on the one hand in characterizing, by the associated $P_{SMd}$, the places of the surveillance area that present a high $P_{SMd}$ and a sufficient density of instances to ensure a good estimation of $P_{SMd}$. It also consists in characterizing, by the associated $\overset{*}{P}_{SMa}(t)$, the other places, that is, the places presenting a low $P_{SMd}$ or an insufficient density of instances to ensure a good estimation of $P_{SMd}$. This way, it is possible to produce an intelligent map 29 of the surveillance area 12. This map can be presented graphically to an operator in the form of a map showing a double annotation as illustrated by Figure 9. Advantageously, such a map simultaneously shows the areas 31 to 33 presenting a significant probability of presence, in which the probability of locating an intruder is higher and the areas 81 to 83 presenting a probability of non-presence that is also significant, in which the probability of locating an intruder is almost zero.

**Claims**

1. Method for determining in a given submarine surveillance area (12) watched over by underwater detection means, the places likely to host a submarine intruder, the determination being performed by a surveillance ship or aircraft moving above the surveillance area and applying (15), at given instants, means for detecting the presence of a target in the surveillance area, **characterized in that** it applies the following steps:

   - a first step (21) of estimating the position of potential intruders in the surveillance area (12), this estimation being performed by determining the probability of presence $P_{SMd}(t)$ of an intruder at each point of the surveillance area for a given instant t, said intruder being assigned a behaviour according to a predefined, noise-affected deterministic reactive model ;
   - a second step (22) of estimating the places of the surveillance area in which an intruder is not likely to move, this step comprising :

     - a first substep (23) of estimating the probability of presence $P_{SMa}(t)$ of an intruder at each point of the surveillance area for a given instant t, said intruder being assigned an almost random non-reactive behaviour defined by a rudimentary kinematic model ;

     - a second substep (24) of calculating the probability of non-presence $\overset{*}{P}_{SMa}(t)$ corresponding to the probability of presence $P_{SMa}(t)$ estimated in the first substep and defined by the relation :

$$P^{*}_{SMa}(t) = 1 - P_{SMa}(t)$$

   The two estimations being performed simultaneously by different methods so that the presence distribution law $P_{SMa}(t)$ and the non-presence distribution law $P^{*}_{SMa}(t)$ determined in this way are not deduced from each other, the probabilities $P_{SMd}(t)$ and $P_{SMa}(t)$ defined in a given place of the surveillance area taking into account probabilities $P_{d}(t)$ of detection of a target by the said detection means, determined for each instant t and each place of the surveillance area (12).

2. Method according to Claim 1, **characterized in that** it also comprises a third step (25) of associating, to decide based on given criteria which of the two information items $P_{SMd}$ and $\overset{*}{P}_{SMa}$ is the most relevant at each point of the area being surveilled (12) and at each instant t.

3. Method according to one of Claims 1 or 2, **characterized in that** the first step (21) consists in estimating the probability of presence of an intruder by a Monte Carlo method, the instances of intruders being studied being moved according to a noise-affected deterministic reactive behaviour and the probability of presence at each point and at each instant t being obtained from the local density of the instances at that point and their aggregate probabilities of having been detected in past applications of the detection means.

4. Method according to any one of the preceding claims, **characterized in that** the second step (22) consists in estimating the probability of presence of an intruder by an HMM method, the associated transition matrix reflecting an almost random and non-reactive behaviour, the detection probabilities of the detection means at each point and at each instant t providing the observation function in the HMM process.

**Patentansprüche**

1. Verfahren zum Ermitteln, in einem gegebenen, mit Unterwasserdetektionsmittel überwachten Unterseeüberwachungsbereich (12), der Orte, an denen es wahrscheinlich zu einem Unterwasser-Eindringversuch kommt, wobei die Ermittlung von einem Überwachungsschiff oder -luftfahrzeug durchgeführt wird, das sich über dem Überwachungsbereich bewegt, und zu gegebenen Zeitpunkten Mittel zum Detektieren der Anwesenheit eines Ziels in dem Überwachungsbereich anwendet (15), **dadurch gekennzeichnet, dass** es die folgenden Schritte anwendet:

   - einen ersten Schritt (21) des Schätzens der Position von potentiellen Eindringlingen in dem Überwachungsbereich (12), wobei diese Schätzung durch Ermitteln der Wahrscheinlichkeit $P_{SMd}(t)$ der Anwesenheit eines Eindringlings an jedem Punkt des Überwachungsbereichs für einen gegebenen Zeitpunkt t durchgeführt wird, wobei dem Eindringling ein Verhalten gemäß einem vordefinierten, geräuschbeeinflussten, deterministischen reaktiven Modell zugeordnet wird;
   - einen zweiten Schritt (22) des Schätzens der Orte des Überwachungsbereichs, an denen sich wahrscheinlich kein Eindringling bewegt, wobei dieser Schritt Folgendes beinhaltet:
   - einen ersten Teilschritt (23) des Schätzens der Wahrscheinlichkeit $P_{SMa}(t)$ der Anwesenheit eines Eindringlings an jedem Punkt des Überwachungsbereichs für einen gegebenen Zeitpunkt t, wobei dem Eindringling ein durch ein rudimentäres kinematisches Modell definiertes fast zufälliges nichtreaktives Verhalten zugeordnet wird;
   - einen zweiten Teilschritt (24) des Berechnens der Nicht-Anwesenheits-Wahrscheinlichkeit $P^*_{SMa}(t)$, die der Anwesenheitswahrscheinlichkeit $P_{SMa}(t)$ entspricht, die im ersten Teilschritt geschätzt wurde und durch die folgende Relation definiert wird:

$$P^*_{SMa}(t) = 1 - P_{SMa}(t);$$

   wobei die beiden Schätzungen gleichzeitig mit verschiedenen Methoden erfolgen, so dass das Anwesenheitsverteilungsgesetz $P_{SMa}(t)$ und das Nicht-Anwesenheitsverteilungsgesetz $P^*_{SMa}(t)$, die auf diese Weise ermittelt wurden, nicht voneinander abgeleitet werden; wobei die an einem gegebenen Ort des Überwachungsbereichs definierten Wahrscheinlichkeiten $P_{SMd}(t)$ und $P_{SMa}(t)$ Wahrscheinlichkeiten $P_d(t)$ der Detektion eines Ziels durch das genannte Detektionsmittel berücksichtigen, die für jeden Zeitpunkt t und jeden Ort des Überwachungsbereichs (12) ermittelt wurden.

2. Verfahren nach Anspruch 1, **dadurch gekennzeichnet, dass** es auch einen dritten Schritt (25) des Assoziierens beinhaltet, um auf der Basis von gegebenen Kriterien zu entscheiden, welche der beiden Informationen $P_{SMd}$ und $P^*_{SMa}$ an jedem Punkt des überwachten Bereichs (12) und zu jedem Zeitpunkt t am relevantesten ist.

3. Verfahren nach Anspruch 1 oder 2, **dadurch gekennzeichnet, dass** der erste Schritt (21) im Schätzen der Wahrscheinlichkeit der Anwesenheit eines Eindringlings mit einem Monte-Carlo-Verfahren besteht, wobei die Instanzen von studierten Eindringlingen gemäß einem geräuschbeeinflussten deterministischen reaktiven Verhalten bewegt werden und die Anwesenheitswahrscheinlichkeit an jedem Punkt und zu jedem Zeitpunkt t anhand der lokalen Dichte der Instanzen an diesem Punkt und ihren Summenwahrscheinlichkeiten erhalten werden, dass sie in vergangenen Anwendungen des Detektionsmittels detektiert wurden.

4. Verfahren nach einem der vorherigen Ansprüche, **dadurch gekennzeichnet, dass** der zweite Schritt (22) im Schätzen der Wahrscheinlichkeit der Anwesenheit eines Eindringlings mit einem HMM-Verfahren besteht, wobei die assoziierte Übergangsmatrix ein fast zufälliges und nicht-reaktives Verhalten reflektiert, wobei die Detektionswahrscheinlichkeiten des Detektionsmittels an jedem Punkt und zu jedem Zeitpunkt t die Beobachtungsfunktion im HMM-Prozess bereitstellt.

**Revendications**

1. Procédé destiné à déterminer, dans une zone de surveillance sous-marine donnée (12) surveillée par un moyen de détection subaquatique, les endroits susceptibles d'accueillir un intrus sous-marin, la détermination étant mise en oeuvre par un vaisseau de surveillance ou un aéronef en déplacement au-dessus de la zone de surveillance, et appliquant (15), à des instants donnés, un moyen de détection de la présence d'une cible dans la zone de surveillance, **caractérisé en ce qu'**il applique les étapes ci-dessous :

   - une première étape (21) d'estimation de la position d'intrus potentiels dans la zone de surveillance (12), ladite estimation étant mise en oeuvre en déterminant la probabilité de présence $P_{SMd}(t)$ d'un intrus à chaque point de la zone de surveillance pour un instant donné « t », ledit intrus étant associé à un comportement selon un modèle réactif déterministe prédéfini affecté par le bruit ;
   - une deuxième étape (22) d'estimation des endroits de la zone de surveillance dans lesquels un intrus n'est pas susceptible de se déplacer, ladite étape comprenant :
   - une première sous-étape (23) d'estimation de la probabilité de présence $P_{SMa}(t)$ d'un intrus à chaque point de la zone de surveillance pour un instant donné « t », ledit intrus étant associé à un comportement non réactif quasi aléatoire défini par un modèle cinématique rudimentaire ;
   - une seconde sous-étape (24) de calcul de la probabilité d'absence $P^*_{SMa}(t)$ correspondant à la probabilité de présence $P_{SMa}(t)$ estimée au cours de la première sous-étape et définie par la relation ci-dessous :

$$P^*_{SMa}(t) = 1 - P_{SMa}(t),$$

   les deux estimations étant mises en oeuvre simultanément par différents procédés, de sorte que la loi de distribution de présence $P_{SMa}(t)$ et la loi de distribution d'absence $P^*_{SMa}(t)$ déterminées de cette façon ne sont pas déduites l'une de l'autre ; les probabilités $P_{SMd}(t)$ et $P_{SMa}(t)$ définies dans un endroit donné de la zone de surveillance tenant compte des probabilités $P_d(t)$ de détection d'une cible par ledit moyen de détection, déterminées pour chaque instant « t », et de chaque endroit de la zone de surveillance (12).

2. Procédé selon la revendication 1, **caractérisé en ce qu'**il comprend en outre une troisième étape (25) d'association permettant de déterminer, sur la base de critères donnés, celui des deux éléments d'information $P_{SMd}$ et $P^*_{SMa}$ le plus pertinent à chaque point de la zone surveillée (12) et à chaque instant « t ».

3. Procédé selon l'une quelconque des revendications 1 ou 2, **caractérisé en ce que** la première étape (21) consiste à estimer la probabilité de présence d'un intrus au moyen d'un procédé de Monte-Carlo, les instances d'intrus étudiées étant déplacées selon un comportement réactif déterministe affecté par le bruit, et la probabilité de présence à chaque point et à chaque instant « t » étant obtenue à partir de la densité locale des instances à ce point, et de leurs probabilités de détection agrégées dans des applications antérieures du moyen de détection.

4. Procédé selon l'une quelconque des revendications précédentes, **caractérisé en ce que** la deuxième étape (22) consiste à estimer la probabilité de présence d'un intrus au moyen d'un procédé HMM, la matrice de transition associée reflétant un comportement quasi aléatoire et non réactif, les probabilités de détection du moyen de détection à chaque point et à chaque instant « t » fournissant la fonction d'observation dans le processus HMM.

Fig. 1

Coast

Area to be protected

Surveillance area

Coast

Penetration area

EP 2 286 272 B1

Results of the detection operations

21

Estimation of the probability of presence $P_{SM}$ of an intruder

Deterministic behaviour model

26

Map of presence probabilities

23

Estimation of the probability of presence $P_{SM_a}$ of an intruder

Almost random behaviour model 14

22

24

Calculation of the probability of non-presence of an intruder $(1-P_{SM_a})$

27

Map of non-presence probabilities

28

29

Association of the information

Overall map

25

Fig. 2

Fig. 3

Coast

Coast

Area to be protected

(11)

Surveillance
area

(12)

41

**Fig. 4**

52

$a_{-1,1}$  $a_{0,1}$  $a_{1,1}$

$a_{-1,0}$  0  $a_{1,0}$

$a_{-1,-1}$  $a_{0,-1}$  $a_{1,-1}$

52

52

51

**Fig. 5**

Fig. 6

$(x_0-1,y_0+1,z_0)$  $(x_0,y_0+1,z_0)$  $(x_0+1,y_0+1,z_0)$

$(x_0-1,y_0,z_0)$  $(x_c,y_0,z_0)$  $(x_0-1,y_0,z_0)$

71

$(x_0-1,y_0-1,z_0)$  $(x_0,y_c-1,z_0)$  $(x_0+1,y_c-1,z_0)$

7- a

71
72
72
72

$P_d = 0$  $z_0$
$P_d = 0,1$  $z_1$
$P_d = 0$  $z_2$
$P_d = 0,7$  $z_3$

7 - b

Fig. 7

18

Fig. 8

Fig. 9